# EUROPEAN PATENT APPLICATION

(11) **EP 3 336 641 A1**
(43) Date of publication of application: **20.06.2018**
(21) Application number: 17207613.5
(22) Date of filing: 15.12.2017
(51) Int. Cl.: G05B 23/02

(54) **SYSTEMS AND METHODS TO PREDICT VALVE PERFORMANCE IN POWER PLANTS**

(30) Priority: 15.12.2016 US 201615380236
(71) Applicant: General Electric Company, Schenectady, NY 12345 (US)
(72) Inventor: PATANIAN, John Jacob, Atlanta, GA 30339 (US); CHANDRASEKHARAN, Rajagopalan, 560066 Bangalore, Karnataka (IN); D'AMATO, James John, Atlanta, GA 30339-8402 (US)
(74) Representative: Fischer, Michael Maria

(57) **Abstract**

Systems (100) and methods (300) to predict valve (106) performance in power plants (140) are disclosed. According to one embodiment of the disclosure, a method (300) for predicting valve (106) performance in power plants (140) can include receiving (305) at least one signal from a valve (106) associated with a power plant (105). The method (300) may further include receiving (310) operational data from one or more power plants (140). The method (300) may further include determining (315) a confidence value associated with operation of the valve (106), based at least in part on the at least one signal from the valve (106) and the operational data from one or more power plants (140). The method (300) can further include comparing (320) the confidence value to a threshold level, and comparing a time during which the confidence value persists to a threshold duration. When the confidence value exceeds the threshold level, and when the time exceeds the threshold duration, the method (300) may include generating (325) an alert for a probability of misoperation of the valve (106). The method may further include identifying (330) a repair or replacement recommendation for the valve (106).

## Description

### TECHNICAL FIELD

Embodiments of this disclosure generally relate to power plants, and more specifically, to systems and methods to predict valve performance in power plants.

### BACKGROUND

A power plant can include one or more turbines, such as, for example, a gas turbine and/or a steam turbine. The power plant may further include one or more valves to control fluids in the power plant. For example, a gas control valve may control the flow of fuel gas to the gas turbine. Valve failures in power plants may lead to costly repairs and potentially extensive loss of operational revenue. As an example, failure of a hydraulic control valve in a gas turbine, such as a gas control valve or a stop ratio valve, can cause gas turbine trips and failed starts and may lead to extended outages while the hydraulic control valve can be repaired or replaced.

### BRIEF DESCRIPTION OF THE DISCLOSURE

Some or all of the above needs and/or problems may be addressed by certain embodiments of the disclosure. Certain embodiments may include systems and methods to predict valve performance in power plants. According to one embodiment of the disclosure, a method can be provided. The method may include receiving at least one signal from a valve associated with a power plant. The method may further include receiving operational data from one or more power plants. The method may further include determining a confidence value associated with operation of the valve, based at least in part on the at least one signal from the valve and the operational data from one or more power plants. The method can further include comparing the confidence value to a threshold level, and comparing a time during which the confidence value persists to a threshold duration. When the confidence value exceeds the threshold level, and when the time exceeds the threshold duration, the method may include generating an alert for a probability of misoperation of the valve. The method may further include identifying a repair or replacement recommendation for the valve.

According to another embodiment of the disclosure, a system can be provided. The system may include a controller. The system can also include a memory with instructions executable by a computer for performing operations that can include: receiving at least one signal from a valve associated with a power plant; receiving operational data from one or more power plants; based at least in part on the at least one signal from the valve and the operational data from one or more power plants, a confidence value associated with operation of the valve can be determined; comparing the confidence value to a threshold level, and comparing a time during which the confidence value persists to a threshold duration; when the confidence value exceeds the threshold level, and when the time exceeds the threshold duration, an alert for a probability of misoperation of the valve may be generated; and identifying a repair or replacement recommendation for the valve.

According to another embodiment of the disclosure, a system can be provided. The system may include a power plant and a valve associated with the power plant. The system may further include a controller in communication with the power plant. The system can also include a memory with instructions executable by a computer for performing operations that can include: receiving at least one signal from the valve; receiving operational data from one or more power plants; based at least in part on the at least one signal from the valve and the operational data from one or more power plants, a confidence value associated with operation of the valve can be determined; comparing the confidence value to a threshold level, and comparing a time during which the confidence value persists to a threshold duration; when the confidence value exceeds the threshold level, and when the time exceeds the threshold duration, an alert for a probability of misoperation of the valve may be generated; and identifying a repair or replacement recommendation for the valve.

Other embodiments, features, and aspects of the disclosure will become apparent from the following description taken in conjunction with the following drawings.

### BRIEF DESCRIPTION OF THE DRAWINGS

Having thus described the disclosure in general terms, reference will now be made to the accompanying drawings, which are not necessarily drawn to scale, and wherein:
FIG. 1 illustrates an example system environment to predict valve performance in power plants in accordance with certain embodiments of the disclosure.
FIG. 2 illustrates an example valve performance prediction subsystem in accordance with certain embodiments of the disclosure.
FIG. 3 illustrates an example flowchart of a method to predict valve performance in power plants in accordance with certain embodiments of the disclosure.
FIG. 4 illustrates an example control system configured for providing systems and methods to predict valve performance in power plants in accordance with certain embodiments of the disclosure.

The disclosure now will be described more fully hereinafter with reference to the accompanying drawings, in which example embodiments of the disclosure are shown. This disclosure may, however, be embodied in many different forms and should not be construed as limited to the example embodiments set forth herein; rather, these example embodiments, which are also referred to herein as "examples," are described in enough detail to enable those skilled in the art to practice the present subject matter. The example embodiments may be combined, other embodiments may be utilized, or structural, logical, and electrical changes may be made, without departing from the scope of the claimed subject matter. Like numbers refer to like elements throughout.

### DETAILED DESCRIPTION

The following detailed description includes references to the accompanying drawings, which form part of the detailed description. The drawings depict illustrations, in accordance with example embodiments. These example embodiments, which are also referred to herein as "examples," are described in enough detail to enable those skilled in the art to practice the present subject matter. The example embodiments may be combined, other embodiments may be utilized, or structural, logical, and electrical changes may be made, without departing from the scope of the claimed subject matter. The following detailed description is, therefore, not to be taken in a limiting sense, and the scope is defined by the appended claims and their equivalents. Like numbers refer to like elements throughout.

Certain embodiments described herein relate to systems and methods to predict valve performance in power plants. For example, as will be described in greater detail herein, at least one signal from a valve associated with a power plant may be received; operational data from one or more power plants may also be received; based at least in part on the at least one signal from the valve and the operational data from one or more power plants, a confidence value associated with operation of the valve may be determined; the confidence value may be compared to a threshold level, and a time during which the confidence value persists may be compared to a threshold duration; when the confidence value exceeds the threshold level, and when the time exceeds the threshold duration, an alert for a probability of misoperation of the valve may be generated; and a repair or replacement recommendation for the valve may be identified.

One or more technical effects associated with certain embodiments herein may include, but are not limited to, predicting valve failures and misoperations. Predicting failures and misoperations for valves associated with operation of the gas turbine or power plant can enable a customer to proactively plan outages to repair or replace those valves and avoid potentially lengthy unplanned outages. Certain embodiments herein may also have a technical effect of minimizing possible false positive results in predicting valve performance. The following provides the detailed description of various example embodiments related to systems and methods to predict valve performance in power plants.

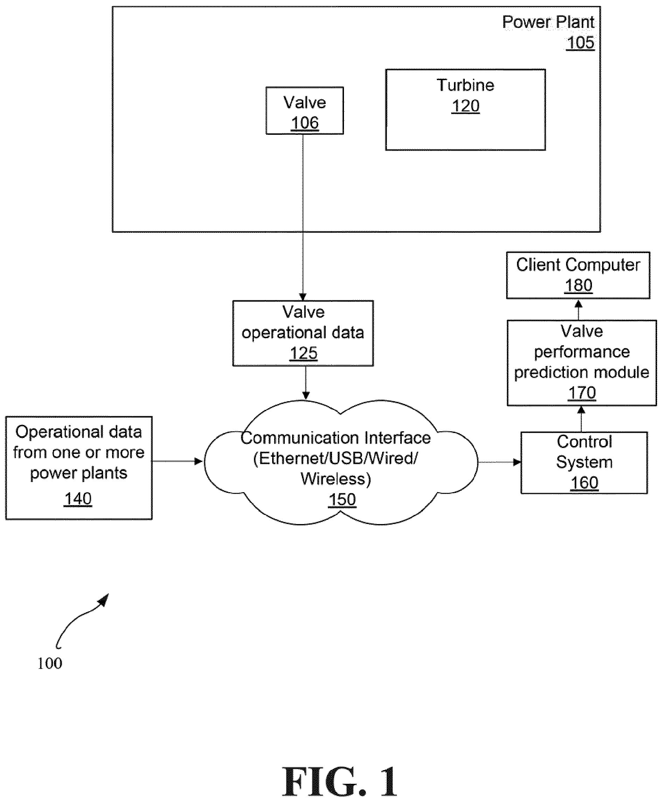

FIG. 1 depicts an example system 100 to implement certain methods and systems to predict performance of a valve, such as valve 106, in a power plant 105. According to an example embodiment of the disclosure, the power plant 105 may include one or more turbines, such as a turbine 120 of FIG. 1, that can produce power, a valve 106 that can regulate fluids to the turbine 120 or in the power plant 105, and one or more controllers, such as the control system 160, that can control the power plant 105 and/or the turbine 120. The system environment 100, according to an embodiment of the disclosure, can further include valve operational data 125 that can receive data from sensors associated with the valve 106, operational data from one or more power plants 140, a communication interface 150, a control system 160, a valve performance prediction module 170, and a client computer 180.

Referring again to FIG. 1, the valve 106 of FIG. 1 may be associated with operation of a turbine 120, such as a gas turbine or a steam turbine. In such instances, the valve 106 may be a control valve that controls fluids associated with an operation of the turbine 120, such as, for example, a fuel gas control valve that can control fuel flow to a gas turbine. In other embodiments, the valve 106 may be associated with operation of the power plant 105, such as a bypass control valve controlling steam bypass around a steam turbine. The valve 106 may be actuated by any of one or more methods, such as, by hydraulic actuation, pneumatic actuation, electric actuation, and so on. Based on a flow path through the valve 106, the valve 106 may be of any of one or more types, such as, a butterfly valve, a ball valve, a globe valve, an angle body plug valve, and so on.

The valve operational data 125 and the operational data from one or more power plants 140 may include discrete data and time series data. For example, valve operational data 125 may include time series data such as a current feedback signal of the valve 106, a position feedback signal of the valve 106, a position command signal of the valve 106, and so on. Valve operational data may also include operational hours of the valve, operating time in specific modes of operation, and so on. In another embodiment of the disclosure, discrete data associated with the operational data from one or more power plants 140 may include a failure mode and effects analysis (FMEA) data from one or more power plants for valves similar to valve 106. Discrete data may also be available in the form of mean time between failure (MTBF) of valves similar to valve 106. Discrete data and time series data may include data regarding failure events and anomalous operational events associated with valves similar to valve 106. In an example embodiment of the disclosure, operational data from one or more power plants 140 may include a set of data from valves that have similar configuration to valve 106. The valve operational data 125 may include data representing valve 106 operation at a current time or from a prior operating time, such as, for example, operation from 1 week prior to current time, operation from 2 weeks prior to current time, operation from 4 weeks prior to current time, and so on.

The control system 160 can be communicatively coupled to receive valve operational data 125 and operational data from one or more power plants 140 via a communication interface 150, which can be any of one or more communication networks such as, for example, an Ethernet interface, a Universal Serial Bus (USB) interface, or a wireless interface. In certain embodiments, the control system 160 can be coupled to the valve operational data 125 and operational data from one or more power plants 140 by way of a hard wire or cable, such as, for example, an interface cable.

The control system 160 can include a computer system having one or more processors that can execute computer-executable instructions to receive and analyze data from various data sources, such as the valve operational data 125, and operational data from one or more power plants 140 and can include the valve performance prediction module 170. The control system 160 can further provide inputs, gather transfer function outputs, and transmit instructions from any number of operators and/or personnel. The control system 160 can perform control actions as well as provide inputs to the valve performance prediction module 170. In some other embodiments, the control system 160 may determine control actions to be performed based on data received from one or more data sources, for example, from the valve operational data 125 or operational data from one or more power plants 140. In other instances, the control system 160 can be an independent entity communicatively coupled to the valve performance prediction module 170.

In accordance with an embodiment of the disclosure, a system for valve performance prediction may be provided. The system 100 may include a power plant 105, a valve 106 associated with the power plant 105, and a controller 160. The controller 160 can include a memory that can contain computer-executable instructions capable of receiving at least one signal from the valve 106. The data received in the at least one signal from the valve 106 may be represented by valve operational data 125 of FIG. 1. Based at least in part on the at least one signal from the valve 106 and the operational data from one or more power plants 140, a confidence value associated with operation of the valve 106 may be determined. The confidence value associated with operation of the valve 106 may include, for example, a probability that the valve 106 may misoperate, malfunction or fail.

The confidence value associated with operation of the valve 106 may be determined by the valve performance prediction module 170, or by the control system 160. The confidence value associated with the operation of the valve 106 may then be compared with a threshold level. The threshold level may be indicative of a valve degradation level at which valves similar to the valve 106 can begin to show signs of malfunction. The threshold level may be based at least in part on valve operational data 125 from the valve 106 and operational data from one or more power plants 140.

The confidence value associated with operation of the valve 106 may be determined on a real-time continuous basis. For example, the confidence value may be determined continuously during operation of the valve 106 when the power plant 105 is operational, such as, for example, during startup of the power plant, steady state operation of the power plant, and so on. In another example embodiment of the disclosure, the confidence value may be determined on a discrete time interval basis. For example, the confidence value may be determined every 2 hours, every 4 hours, every 8 hours, and so on, irrespective of the valve's 106 operational status. The confidence value may also be determined when the power plant 105 is shut down, so that the valve 106 is non-operational.

Referring again to FIG. 1, the memory associated with the controller 160 can further contain computer-executable instructions capable of comparing a time during which the confidence value persists to a threshold duration. When the confidence value exceeds the threshold level, and when the time exceeds the threshold duration, an alert for the probably of misoperation of the valve 106 may be generated. By way of an example, the valve 106 may have a transient event where the confidence value associated with the operation of the valve 106 exceeds the threshold level. Alternatively, the confidence value associated with the operation of the valve 106 may exceed the threshold level due to an anomalous data input in the valve operational data 125 or operational data from one or more power plants 140. If the confidence value does not persist for a time less than the threshold duration, the alert may not be generated.

The alert may be outputted via a client device, for example, the client computer 180 as indicated in FIG. 1. A repair or replacement recommendation for the valve 106 can then be identified. For example, for a hydraulic control valve supplying fuel to a gas turbine, if the confidence value associated with its operation exceeds a threshold level, and if time that the confidence value exceeds the threshold level persists for a period greater than a threshold duration, an alert for the probability of misoperation or malfunction of the hydraulic control can be generated and an inspection, repair or replacement recommendation for the hydraulic control valve can be identified. Furthermore, the identified repair or replacement recommendation for the valve 106 can be performed by or otherwise implemented by the control system 160.

The misoperation of the valve 160 may include several categories of valve malfunction, including, but not limited to, valve not following command, valve vibration and chatter that may lead to valve failure, malfunction of valve actuator, and so on. Valve malfunction may occur due to several factors, including wear and tear due to operation, foreign particles in a fluid flowing through the valve, and so on.

As an example embodiment, a hydraulic control valve in a gas turbine, such as a gas control valve or a stop ratio valve, may have sensors indicating valve operational parameters, such as, for example, a current applied by the control system 160 on the hydraulic control valve and a position feedback signal from a linear voltage distance transducer (LVDT) associated with the hydraulic control valve. There may also be signals that indicate a position command signal from the control system 160 to the hydraulic control valve. The hydraulic control valve may also have sensors indicating a level of vibration of the valve during operation. The control system 160 may apply a current to actuate the hydraulic control valve. The current applied can be proportional to an error between the position command signal from the controller 160 and a position feedback signal from the LVDT. If the error between the position command signal and a reference signal stored in the control system 160 exceeds a predetermined threshold, the control system 160 can compensate for the error by commanding the hydraulic control valve to move faster. A faulty or misoperational hydraulic control valve may be unable to follow the reference signal from the control system 160, and thus the error between command and reference can become even larger. The hydraulic control valve may get more erratic as its components can wear out or otherwise have a fault.

Referring again to FIG. 1, the control system 160 or the valve performance prediction module can also include software and/or hardware to determine the confidence value associated with the operation of the valve 106. This may include, executing a machine learning classification algorithm that can analyze the at least one signal from the valve 106 and the operational data from one or more power plants 140. The machine learning classification algorithm can include an architecture that can utilize valve operational data 125 and operational data from one or more power plants 140 to determine the confidence value associated with the operation of the valve 106.

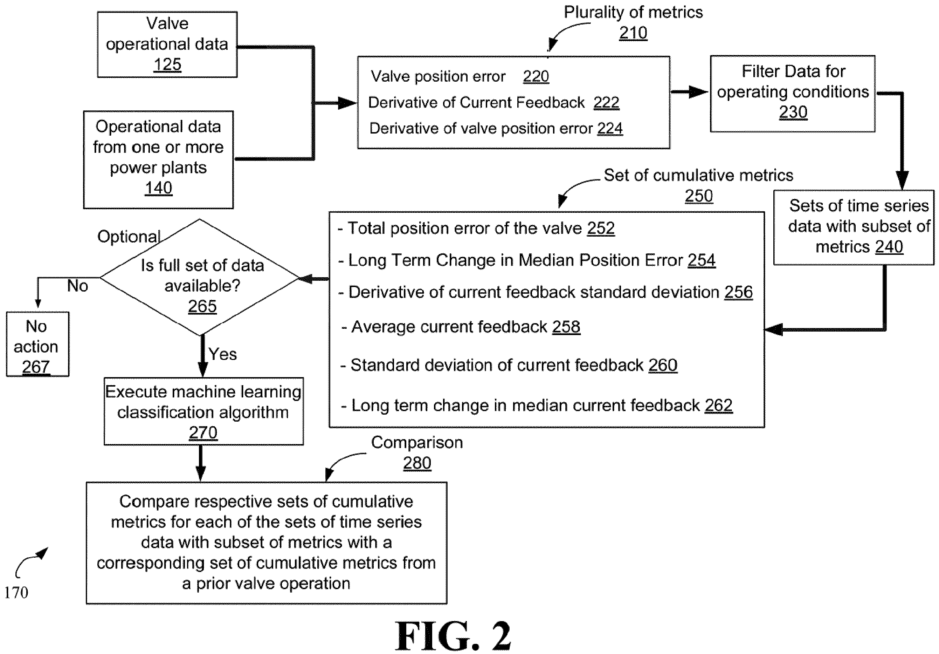

FIG. 2 depicts an example valve performance module 170 for implementing certain methods and systems to predict performance of the valve 106. The valve performance module 170 may be part of the control system 160. In other embodiments, the valve performance module 170 may be independent of the control system 160.

Referring again to FIG. 2, inputs from valve operational data 125 and operational data from one or more power plants 140 can be fed to the valve performance prediction module 170. Based at least in part on the valve operational data 125 and operational data from one or more power plants 140, the computer instructions capable of determining the confidence value associated with the operation of the valve 106 may also include determining a plurality of metrics 210 associated with the operation of the valve 106. The plurality of metrics 210 associated with the operation of the valve 106 may include, for example, valve position error 220, derivative of current feedback from the valve 222, derivative of valve position error 224, and so on.

Once the plurality of metrics 210 may be determined, the valve operational data 125 and operational data from one or more power plants 140 may be filtered, as indicated in block 230. Filtering may remove, for example, non-operational data and anomalous data, and may provide a set of focused data for further processing. The filtered data 230 may then be partitioned into one or more sets of time series data. For example, the filtered data 230 may be partitioned into data sets of 4-hour increments, 8-hour increments, and so on. For each of the one or more sets of time series data 240, a respective subset of metrics may be determined. This is represented by sets of time series data with subset of metrics 240. The determination of respective subsets of metrics may be based at least in part on the operational data from one or more power plants 140 and/or the operational data from the valve 125.

For each respective subset of the plurality of metrics, a respective set of cumulative metrics may be determined. Cumulative metrics may represent valve 106 operation over an extended period of time. In an example embodiment of the disclosure, predicting valve misoperation may be based on cumulative metrics. In other embodiments, predicting valve misoperation may be based on non-cumulative metrics, such as, for example, valve position error 220 or derivative of valve position error 224.

Referring again to FIG. 2, an example set of cumulative metrics 250 is depicted. The set of cumulative metrics 250 may include, for example, a total position error 252 of the valve 106, a long term change in median position error 254 of the valve 106, a derivative of current feedback standard deviation 256 of the valve 106, an average current feedback 258 of the valve 106, a standard deviation of the current feedback 260 of the valve 106, or a long term change in median current feedback 262 of the valve 106. In one example embodiment, long term change in median position error 254 may indicate a change in median position error over a certain time increment, such as 24 hours. In other embodiments, long term change in median position error 254 may indicate a change in median position error over a certain time increment, such as 4 hours, 8 hours, 12 hours, 48 hours, and so on. Similarly, in one example embodiment, long term change in median current feedback 262 may indicate a change in median current feedback over a certain time increment, such as 24 hours. In other embodiments, long term change in median current feedback 262 may indicate a change in median current feedback over a certain time increment, such as 4 hours, 8 hours, 12 hours, 48 hours, and so on.

As shown in FIG. 2, the valve prediction module 170 may further include an optional decision to verify if a full set of data 265 corresponding to the set of cumulative metrics 250 is available. Optionally, if the full set of data 265 is not available, no further action may be taken, as indicated by block 267.

Once the set of cumulative metrics 250 can be determined, the valve prediction module 170 further includes executing a machine learning classification algorithm 270. The machine learning classification algorithm 270 may include rapid diagnosis capability and may include ability to predict future events based at least in part on past behavior. For example, the machine learning classification algorithm can enable combining time series operational data with discrete data rapidly that can enable determining a confidence value associated with the operation of the valve 106. Referring now to the comparison block 280 of FIG. 2, a comparison of the respective sets of cumulative metrics for each of the sets of time series data with subset of metrics with a corresponding set of cumulative metrics from a prior valve operation can be performed.

The comparison 280 may be performed as part of the machine learning classification algorithm 270 or as a separate activity in the valve performance prediction module 170 or in the control system 160. Based on the comparison 280, a confidence value associated with operation of the valve may be determined. The confidence value associated with operation of the valve may be compared with a confidence value based on a prior operation of the valve 106 and a time during which the confidence value persists may be compared to a threshold duration.

By way of an example embodiment, a set of cumulative metrics 250 from a hydraulic gas control valve operation gathered from an operation two weeks prior to current time may be compared with a set of cumulative metrics 250 gathered from the hydraulic gas control valve's current operation. Based on this comparison, a confidence value associated with the operation of the hydraulic gas control valve may be determined. The determined confidence value can be compared with one or more confidence values determined in a prior operation of the valve, for example, the operation from two weeks prior to current time. Also, the time duration for which the confidence value persists can be compared to a threshold duration. Using an example threshold duration of one week to prevent false positives, if a confidence value exceeding a threshold confidence value calculated periodically for the last one week does not show any change, i.e., does not decrease, the valve performance prediction module may determine that the hydraulic gas control valve may have a high probability of misoperation, and the control system 160 may issue an alert identifying the hydraulic gas control valve and generate an estimated probability of misoperation of the valve. An operator at the power plant can utilize the alert and the generated estimated probability to plan for repair or replacement of the hydraulic gas control valve.

In another example embodiment, the confidence value determined based on the hydraulic gas control valve's current operation may be compared to a confidence value determined at one or more prior operations of the valve. This may reveal the level of degradation or other faults associated with the hydraulic gas control valve. The machine learning classification algorithm may utilize the hydraulic gas control valve's historical set of cumulative metrics along with predicted confidence values to predict a probability of misoperation of the valve. The machine learning classification algorithm may also utilize historical set of cumulative metrics for hydraulic gas control valves at other power plants in predicting a probability of misoperation of the valve.

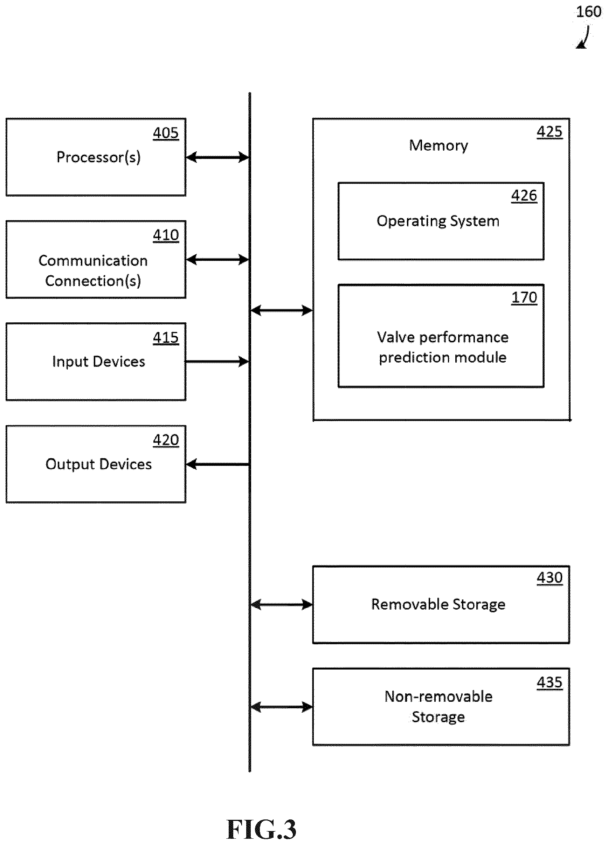

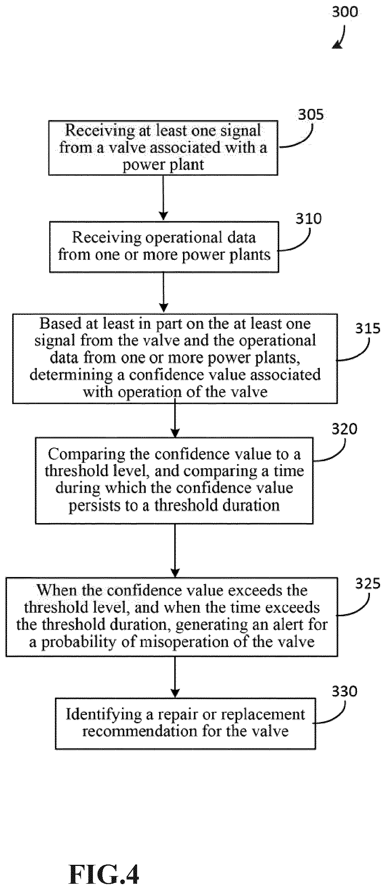

Referring now to FIG. 3, a flow diagram of an example method 300 to predict valve performance in power plants is shown, according to an example embodiment of the disclosure. The method 300 may be utilized in association with various systems, such as the system 100 illustrated in FIG. 1, the valve performance prediction module 170 illustrated in FIG. 2, and/or the control system 160 illustrated in FIG. 4.

The method 300 may begin at block 305. At block 305, at least one signal from a valve 106 associated with a power plant 105 may be received. The at least one signal may be input to valve operation data 125. Next, at block 310, the method 300 may include receiving operational data from one or more power plants 140. At block 315, the method 300 may further include determining a confidence value associated with operation of the valve 106, based at least in part on the at least one signal from the valve, represented by valve operational data 125, and the operational data from one or more power plants 140. Next at block 320, the method 1100 may further include comparing the confidence value to a threshold level, and comparing a time during which the confidence value persists to a threshold duration. At block 325, the method 300 can include generating an alert for a probability of misoperation of the valve 106, when the confidence value exceeds the threshold level, and when the time exceeds the threshold duration. Further at block 330, the method 300 can include identifying a repair or replacement recommendation for the valve 106.

Attention is now drawn to FIG. 4, which illustrates an example controller 160 configured for implementing certain systems and methods to predict valve performance in power plants in accordance with certain embodiments of the disclosure. The controller can include a processor 405 for executing certain operational aspects associated with implementing certain systems and methods to predict valve performance in power plants in accordance with certain embodiments of the disclosure. The processor 405 can be capable of communicating with a memory 425. The processor 405 can be implemented and operated using appropriate hardware, software, firmware, or combinations thereof. Software or firmware implementations can include computer-executable or machine-executable instructions written in any suitable programming language to perform the various functions described. In one embodiment, instructions associated with a function block language can be stored in the memory 425 and executed by the processor 405.

The memory 425 can be used to store program instructions that are loadable and executable by the processor 405 as well as to store data generated during the execution of these programs. Depending on the configuration and type of the controller 160, the memory 425 can be volatile (such as random access memory (RAM)) and/or non-volatile (such as read-only memory (ROM), flash memory, etc.). In some embodiments, the memory devices can also include additional removable storage 430 and/or non-removable storage 435 including, but not limited to, magnetic storage, optical disks, and/or tape storage. The disk drives and their associated computer-readable media can provide non-volatile storage of computer-readable instructions, data structures, program modules, and other data for the devices. In some implementations, the memory 425 can include multiple different types of memory, such as static random access memory (SRAM), dynamic random access memory (DRAM), or ROM.

The memory 425, the removable storage 430, and the non-removable storage 435 are all examples of computer-readable storage media. For example, computer-readable storage media can include volatile and non-volatile, removable and non-removable media implemented in any method or technology for storage of information such as computer-readable instructions, data structures, program modules or other data. Additional types of computer storage media that can be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the devices. Combinations of any of the above should also be included within the scope of computer-readable media.

Controller 160 can also include one or more communication connections 410 that can allow a control device (not shown) to communicate with devices or equipment capable of communicating with the controller 160. The controller can also include a computer system (not shown). Connections can also be established via various data communication channels or ports, such as USB or COM ports to receive cables connecting the controller 160 to various other devices on a network. In one embodiment, the controller 160 can include Ethernet drivers that enable the controller 160 to communicate with other devices on the network. According to various embodiments, communication connections 410 can be established via a wired and/or wireless connection on the network.

The controller 160 can also include one or more input devices 415, such as a keyboard, mouse, pen, voice input device, gesture input device, and/or touch input device. It can further include one or more output devices 420, such as a display, printer, and/or speakers.

In other embodiments, however, computer-readable communication media can include computer-readable instructions, program modules, or other data transmitted within a data signal, such as a carrier wave, or other transmission. As used herein, however, computer-readable storage media do not include computer-readable communication media.

Turning to the contents of the memory 425, the memory 425 can include, but is not limited to, an operating system (OS) 426 and one or more application programs or services for implementing the features and aspects disclosed herein. Such applications or services can include a valve performance prediction module 170 for executing certain systems and methods to predict valve performance in power plants. The valve performance prediction module 170 can reside in the memory 425 or can be independent of the controller 160, as represented in FIG. 1. In one embodiment, the valve performance prediction module 170 can be implemented by software that can be provided in configurable control block language and can be stored in non-volatile memory. When executed by the processor 405, the valve performance prediction module 170 can implement the various functionalities and features associated with the controller 160 described in this disclosure.

As desired, embodiments of the disclosure may include a controller 160 with more or fewer components than are illustrated in FIG. 4. Additionally, certain components of the controller 160 of FIG. 4 may be combined in various embodiments of the disclosure. The controller 160 of FIG. 4 is provided by way of example only.

References are made to block diagrams of systems, methods, apparatuses, and computer program products according to example embodiments. It will be understood that at least some of the blocks of the block diagrams, and combinations of blocks in the block diagrams, may be implemented at least partially by computer program instructions. These computer program instructions may be loaded onto a general purpose computer, special purpose computer, special purpose hardware-based computer, or other programmable data processing apparatus to produce a machine, such that the instructions which execute on the computer or other programmable data processing apparatus create means for implementing the functionality of at least some of the blocks of the block diagrams, or combinations of blocks in the block diagrams discussed.

These computer program instructions may also be stored in a non-transitory computer-readable memory that can direct a computer or other programmable data processing apparatus to function in a particular manner, such that the instructions stored in the computer-readable memory produce an article of manufacture including instruction means that implement the function specified in the block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide task, acts, actions, or operations for implementing the functions specified in the block or blocks.

One or more components of the systems and one or more elements of the methods described herein may be implemented through an application program running on an operating system of a computer. They also may be practiced with other computer system configurations, including hand-held devices, multiprocessor systems, microprocessor based or programmable consumer electronics, minicomputers, mainframe computers, and the like.

Application programs that are components of the systems and methods described herein may include routines, programs, components, data structures, and so forth that implement certain abstract data types and perform certain tasks or actions. In a distributed computing environment, the application program (in whole or in part) may be located in local memory or in other storage. In addition, or alternatively, the application program (in whole or in part) may be located in remote memory or in storage to allow for circumstances where tasks may be performed by remote processing devices linked through a communications network.

Many modifications and other embodiments of the example descriptions set forth herein to which these descriptions pertain will come to mind having the benefit of the teachings presented in the foregoing descriptions and the associated drawings. Thus, it will be appreciated that the disclosure may be embodied in many forms and should not be limited to the example embodiments described above.

Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Various aspects and embodiments of the present invention are defined by the following clauses:
1. A method comprising:
   receiving at least one signal from a valve associated with a power plant;
   receiving operational data from one or more power plants;
   based at least in part on the at least one signal from the valve and the operational data from one or more power plants, determining a confidence value associated with operation of the valve;
   comparing the confidence value to a threshold level, and comparing a time during which the confidence value persists to a threshold duration;
   when the confidence value exceeds the threshold level, and when the time exceeds the threshold duration, generating an alert for a probability of misoperation of the valve; and
   identifying a repair or replacement recommendation for the valve.
2. The method of clause 1, wherein the at least one signal from the valve comprises:
   a position command signal of the valve, a position feedback signal of the valve, or a current feedback signal of the valve.
3. The method of clause 1, wherein the at least one signal from the valve and the operational data from one or more power plants comprise discrete data and time series data.
4. The method of clause 1, wherein determining a confidence value associated with operation of the valve comprise determination on a real-time continuous basis and determination on a discrete time interval basis.
5. The method of clause 1, wherein determining a confidence value associated with operation of the valve comprises:
   determining a plurality of metrics associated with the operation of the valve;
   filtering the at least one signal from the valve, wherein the filtering removes non-operational data;
   partitioning the filtered at least one signal into one or more sets of time increments;
   for each of the one or more 4-hour increments, determining a respective subset of the plurality of metrics;
   for each respective subset of the plurality of metrics, determining a respective set of cumulative metrics;
   using a machine learning classification algorithm to analyze each set of cumulative metrics;
   and
   comparing the respective set of cumulative metrics for each of the one or more time increments to the operational data from one or more power plants and a corresponding set of cumulative metrics determined at a prior valve operation.
6. The method of clause 5, wherein the plurality of metrics associated with the operation of the valve comprises: a position error of the valve, a derivative of the current feedback of the valve, or a derivative of a position feedback signal of the valve.
7. The method of clause 5, wherein each respective set of cumulative metrics comprises: a total position error of the valve, a long term change in median position error of the valve, a derivative of current feedback standard deviation of the valve, an average current feedback of the valve, a standard deviation of the current feedback of the valve, or a long term change in median current feedback of the valve.
8. A system comprising:
   a controller; and
   a memory comprising computer-executable instructions operable to:
      receive at least one signal from a valve associated with a power plant;
      receive operational data from one or more power plants;
      based at least in part on the at least one signal from the valve and the operational data from one or more power plants, determine a confidence value associated with operation of the valve;
      compare the confidence value to a threshold level, and compare a time during which the confidence value persists to a threshold duration;
      when the confidence value exceeds the threshold level, and when the time exceeds the threshold duration, generate an alert for a probability of misoperation of the valve; and
      identify a repair or replacement recommendation for the valve.
9. The system of clause 8, wherein the at least one signal from the valve comprises: a position command signal of the valve, a position feedback signal of the valve, or a current feedback signal of the valve.
10. The system of clause 8, wherein the at least one signal from the valve and the operational data from one or more power plants comprise discrete data and time series data.
11. The system of clause 8, wherein the computer-executable instructions operable to determine a confidence value associated with operation of the valve is further operable to: determine the confidence value on a real-time continuous basis and/or determine the confidence value on a discrete time interval basis.
12. The system of clause 8, wherein the computer-executable instructions operable to determine a confidence value associated with operation of the valve is further operable to:
   determine a plurality of metrics associated with the operation of the valve;
   filter the at least one signal from the valve, wherein the filtering removes non-operational data;
   partition the filtered at least one signal from the valve into one or more sets of 4-hour increments;
   for each of the one or more time increments, determine a respective subset of the plurality of metrics;
   for each respective subset of the plurality of metrics, determine a respective set of cumulative metrics;
   execute a machine learning classification algorithm to analyze each set of cumulative metrics;
   and
   compare the respective set of cumulative metrics for each of the one or more time increments to the operational data from one or more power plants and a corresponding set of cumulative metrics determined at a prior valve operation.
13. The system of clause 12, wherein the plurality of metrics associated with the operation of the valve comprises: a position error of the valve, a derivative of the current feedback of the valve, or a derivative of the position feedback signal of the valve.
14. The system of clause 12, wherein each respective set of cumulative metrics comprises: a total position error of the valve, a long term change in median position error of the valve, a derivative of current feedback standard deviation of the valve, an average current feedback of the valve, a standard deviation of the current feedback of the valve, or a long term change in median current feedback of the valve.
15. A system comprising:
   a power plant;
   a valve associated with the power plant;
   a controller; and
   a memory comprising computer-executable instructions operable to:
      receive at least one signal from the valve;
      receive operational data from one or more power plants;
      based at least in part on the at least one signal from the valve and the operational data from one or more power plants, determine a confidence value associated with operation of the valve;
      compare the confidence value to a threshold level, and compare a time during which the confidence value persists to a threshold duration;
      when the confidence value exceeds the threshold level, and when the time exceeds the threshold duration, generate an alert for a probability of misoperation of the valve; and
      identify a repair or replacement recommendation for the valve.
16. The system of clause 15, wherein the at least one signal from the valve comprises: a position command signal of the valve, a position feedback signal of the valve, or a current feedback signal of the valve.
17. The system of clause 15, wherein the computer-executable instructions operable to determine a confidence value associated with operation of the valve is further operable to: determine the confidence value on a real-time continuous basis and/or determine the confidence value on a discrete time interval basis.
18. The system of clause 15, wherein the computer-executable instructions operable to determine a confidence value associated with operation of the valve is further operable to:
   determine a plurality of metrics associated with the operation of the valve;
   filter the at least one signal from the valve, wherein the filtering removes non-operational data;
   partition the filtered at least one signal from the valve into one or more sets of time increments;
   for each of the one or more time increments, determine a respective subset of the plurality of metrics;
   for each respective subset of the plurality of metrics, determine a respective set of cumulative metrics;
   execute a machine learning classification algorithm to analyze each set of cumulative metrics;
   and
   compare the respective set of cumulative metrics for each of the one or more time increments to the data from one or more power plants and a corresponding set of cumulative metrics determined at a prior valve operation.
19. The system of clause 18, wherein the plurality of metrics associated with the operation of the valve comprises: a position error of the valve, a derivative of the current feedback of the valve, or a derivative of the position feedback signal of the valve.
20. The system of clause 18, wherein each respective set of cumulative metrics comprises: a total position error of the valve, a long term change in median position error of the valve, a derivative of current feedback standard deviation of the valve, an average current feedback of the valve, a standard deviation of the current feedback of the valve, or a long term change in median current feedback of the valve.

## Claims

1. A system (100) comprising:
a power plant (105);
a valve (106) associated with the power plant (105);
a controller (160); and
a memory (425) comprising computer-executable instructions operable to:
receive at least one signal from the valve (106);
receive operational data from one or more power plants (140);
based at least in part on the at least one signal from the valve (106) and the operational data from one or more power plants (140), determine a confidence value associated with operation of the valve (106);
compare the confidence value to a threshold level, and compare a time during which the confidence value persists to a threshold duration;
when the confidence value exceeds the threshold level, and when the time exceeds the threshold duration, generate an alert for a probability of misoperation of the valve (106); and
identify a repair or replacement recommendation for the valve (106).

2. The system (100) of claim 1, wherein the at least one signal from the valve (106) comprises: a position command signal of the valve (106), a position feedback signal of the valve (106), or a current feedback signal of the valve (106).

3. The system (100) of claim 1, wherein the computer-executable instructions operable to determine a confidence value associated with operation of the valve (106) is further operable to:
determine (210) a plurality of metrics associated with the operation of the valve (106);
filter (230) the at least one signal from the valve (106), wherein the filtering (230) removes non-operational data;
partition (240) the filtered at least one signal from the valve (106) into one or more sets of time increments;
for each of the one or more time increments, determine a respective subset of the plurality of metrics;
for each respective subset of the plurality of metrics, determine (250) a respective set of cumulative metrics;
execute (270) a machine learning classification algorithm to analyze each set of cumulative metrics (270);
and
compare (280) the respective set of cumulative metrics for each of the one or more time increments to the data from one or more power plants (140) and a corresponding set of cumulative metrics determined at a prior valve operation.

4. The system (100) of claim 3, wherein the plurality of metrics (210) associated with the operation of the valve (106) comprises: a position error (220) of the valve (106), a derivative (222) of the current feedback of the valve (106), or a derivative (224) of the position feedback signal of the valve (106).

5. The system (100) of claim 3, wherein each respective set of cumulative metrics (250) comprises: a total position error (252) of the valve (106), a long term change in median position error (254) of the valve (106), a derivative of current feedback standard deviation (256) of the valve (106), an average current feedback (258) of the valve (106), a standard deviation of the current feedback (260) of the valve (106), or a long term change in median current feedback (262) of the valve (106).

6. A method (300) comprising:
receiving (305) at least one signal from a valve (106) associated with a power plant (105);
receiving (310) operational data from one or more power plants (140);
based at least in part on the at least one signal from the valve (106) and the operational data from one or more power plants (140), determining (315) a confidence value associated with operation of the valve (106);
comparing (320) the confidence value to a threshold level, and comparing a time during which the confidence value persists to a threshold duration;
when the confidence value exceeds the threshold level, and when the time exceeds the threshold duration, generating (325) an alert for a probability of misoperation of the valve (106); and
identifying (330) a repair or replacement recommendation for the valve (106).

7. The method (300) of claim 6, wherein the at least one signal from the valve (106) and the operational data from one or more power plants (140) comprise discrete data and time series data.

8. The method (300) of claims 6, wherein determining (315) a confidence value associated with operation of the valve (106) comprise determination on a real-time continuous basis and determination on a discrete time interval basis.

9. The method (300) of claim 6, wherein determining (315) a confidence value associated with operation of the valve comprises:
determining a plurality of metrics (210) associated with the operation of the valve (106);
filtering the at least one signal from the valve (230), wherein the filtering removes non-operational data;
partitioning the filtered at least one signal into one or more sets of time increments (240);
for each of the one or more sets of time increments, determining a respective subset of the plurality of metrics;
for each respective subset of the plurality of metrics, determining a respective set of cumulative metrics (250);
using a machine learning classification algorithm to analyze each set of cumulative metrics (270);
and
comparing the respective set of cumulative metrics for each of the one or more time increments to the operational data from one or more power plants (140) and a corresponding set of cumulative metrics determined at a prior valve operation (280).

10. The method (300) of claim 9, wherein the plurality of metrics (210) associated with the operation of the valve (106) comprises: a position error of the valve (220), a derivative of the current feedback of the valve (222), or a derivative of a position feedback signal of the valve (224).

11. A system (100) comprising:
a controller (160); and
a memory (425) comprising computer-executable instructions operable to:
receive at least one signal from the valve (106);
receive operational data from one or more power plants (140);
based at least in part on the at least one signal from the valve (106) and the operational data from one or more power plants (140), determine a confidence value associated with operation of the valve (106);
compare the confidence value to a threshold level, and compare a time during which the confidence value persists to a threshold duration;
when the confidence value exceeds the threshold level, and when the time exceeds the threshold duration, generate an alert for a probability of misoperation of the valve (106); and
identify a repair or replacement recommendation for the valve (106).

12. The system (100) of claim 11, wherein the at least one signal from the valve (106) comprises: a position command signal of the valve (106), a position feedback signal of the valve (106), or a current feedback signal of the valve (106).

13. The system (100) of claim 11, wherein the at least one signal from the valve (106) and the operational data from one or more power plants (140) comprise discrete data and time series data.

14. The system (100) of claims 11, wherein the computer-executable instructions operable to determine a confidence value associated with operation of the valve (106) is further operable to: determine the confidence value on a real-time continuous basis and/or determine the confidence value on a discrete time interval basis.

15. The system (100) of claim 11, wherein the computer-executable instructions operable to determine a confidence value associated with operation of the valve (106) is further operable to:
determine (210) a plurality of metrics associated with the operation of the valve; filter (230) the at least one signal from the valve, wherein the filtering removes non-operational data;
partition the filtered at least one signal from the valve into one or more sets of 4-hour increments;
for each of the one or more time increments, determine (240) a respective subset of the plurality of metrics;
for each respective subset of the plurality of metrics, determine (250) a respective set of cumulative metrics;
execute (270) a machine learning classification algorithm to analyze each set of cumulative metrics; and
compare (280) the respective set of cumulative metrics for each of the one or more time increments to the operational data from one or more power plants (140) and a corresponding set of cumulative metrics determined at a prior valve (160) operation.
